# EUROPEAN PATENT SPECIFICATION

(11) **EP 1 419 666 B1**
(45) Date of publication and mention of the grant of the patent: **13.06.2012**
(21) Application number: 02751916.4
(22) Date of filing: 06.08.2002
(51) Int. Cl.: H04W 36/00

(54) **METHODS INVOLVING A CORE NETWORK NODE THAT IS HANDLING A MOBILE SUBSCRIBER AND INITIATES A REQUEST TO A SECOND CORE NETWORK NODE TO HANDLE SAID MOBILE SUBSCRIBER**
VERFAHREN UNTER BETEILIGUNG EINES KERNNETZWERKKNOTENS, DER EINEN MOBILEN TEILNEHMER BEHANDELT UND EINE ANFORDERUNG AN EINEN ZWEITEN KERNNETZWERKKNOTEN ZUR BEHANDLUNG DES MOBILEN TEILNEHMERS EINLEITET
PROCEDES RELATIFS A UN NOEUD DE RESEAU CENTRAL DESSERVANT UN ABONNE MOBILE ET INITIANT UNE REQUETE A UN SECOND NOEUD DE RESEAU CENTRAL DE DESSERVIR LEDIT ABONNE MOBILE

(30) Priority: 21.08.2001 NO 20014064
(43) Date of publication of application: 19.05.2004
(73) Proprietor: Telefonaktiebolaget LM Ericsson (publ), 164 83 Stockholm (SE)
(72) Inventor: BJELLAND, Frode, N-4825 Arendal (NO); LILLEHEIM, Vidar, Oliver, N-4870 Fevik (NO)
(74) Representative: Tonscheidt, Andreas
(86) International application number: PCT/NO2002/000275
(87) International publication number: WO 2003/017704

(56) References cited:
- WO-A-00/31995
- WO-A-01/72065
- WO-A-02/073993
- WO-A-02/080586
- "Digital cellular telecommunications system (Phase 2+) (GSM); Universal Mobile Telecommunications System (UMTS); General Packet Radio Service (GPRS); Service description; Stage 2 (3GPP TS 23.060 version 3.6.0 Release 1999); ETSI TS 123 060", ETSI STANDARDS, EUROPEAN TELECOMMUNICATIONS STANDARDS INSTITUTE, SOPHIA-ANTIPO, FR, January 2001 (2001-01), XP014007552,

## Description

### Field of the invention

The present invention relates to mobile telecommunication systems, and in particular to a method for handling a mobile station in a mobile telecommunication network where a Radio Access Network (RAN) node is connected to several Core network (CN) nodes. The CN nodes are placed in the same domain and cover the same geographical area. This opens up for the possibility of several operators to share the radio network, while still having separate CN nodes. This will for example give access for operators which have a 2^{nd} generation network, but who did not receive licenses for a 3^{rd} generation network.

However, in a domain where a RAN node is connected to several CN nodes, and especially in a domain shared by several operators, it is foreseen that several situations can occur which can cause problems. Such situations can be:
A radio network node routes an initial request (e.g. an Attach Request) to a core network node of a wrong PLMN (Public Land Mobile Network) for a certain MS when several operators share the radio network.
A fault occurs in a core network node or on one of the links towards a core network node.

Operation and maintenance work is required on a core network node or on one of the links towards a core network node.

Upgrade of a core network node is required.

Traffic should be moved from one core network node to another core network node due to e.g. unbalanced load between the core network nodes.

### Brief description of the invention

An object of the present invention is to provide a method for handling a MS in a domain where a RAN node is connected to several CN nodes, and especially in a domain shared by several operators, that avoids the problems mentioned above.

More specific, it is an object of the invention to enable two or more operators share the RAN while having separate CN nodes without impacting the ongoing sessions for an MS which has a subscription at one of the operators, when this MS enters the shared RAN area.

Another object is to enable a (close to) seamless handover of MS data and sessions from one CN node to another when one CN node cannot or should not be reached for an MS or a group of MSs. This means that the solution gives a higher in service performance for the network.

In brief, the method proposes that a core network node can send, i.e. initiate, a request of handling a mobile subscriber to another core network node in a mobile telephony network. The decision to request the handover is done in the CN node, and this decision is not done due to the MS or a RAN node determining that a handover is required (which is the normal case). For example, a CN node receiving an initial request (e.g. Attach Request) from a Mobile Subscriber (MS) will, after discovering that it should not or could not handle the request, forward a request to another CN node, one of the correct PLMN. This CN node will then handle the request from the MS.

The proposed sequences apply especially in a network configuration where a radio network node is connected to more than one core network node of the same domain. However, the sequences can also be applied in a network where a radio network node is only connected to one core network node of a domain (i.e. the domain comprise several CN nodes, but this particular RAN node is connected to only one of them).

The scope of the invention is as defined in the appended patent claims.

### Brief description of the drawings

The invention will now be described in detail in reference to the appended drawing, in which:
Fig. 1 is a block diagram describing the relationship between RNC/BSC and SGSN/MSC in 3GPP release 4
Fig. 2 shows the relationship between RNC/BSC and SGSN/MSC according to the new pool concept
Fig. 3 is a sequence diagram showing a situation where BSC/RNC is unable to route an initial request from an MS to an SGSN of the correct PLMN
Fig. 4 shows a general sequence according to the present invention for changing core network node, in which SGSN 1 requests SGSN 2 to handle an initial request from an MS
Fig. 5 shows a sequence diagram in which SGSN 1 requests SGSN 2 to handle an Attach Request from an MS
Fig. 6 shows a sequence diagram in which SGSN 1 requests SGSN 2 to handle a Routing Area Update Request from an MS
Fig. 7 shows a sequence diagram in which SGSN 1 requests SGSN 2 to handle a SRNS Relocation procedure for an MS
Fig. 8 shows a sequence diagram in which SGSN 1 in a more or less spontaneous way requests SGSN 2 to handle an MS, i.e. the request sent from SGSN 1 is not sent due to an initial request from the MS.
Fig. 9 shows a sequence diagram for a handover of UMTS GPRS MS in state PMM-connected

### Detailed description of the invention

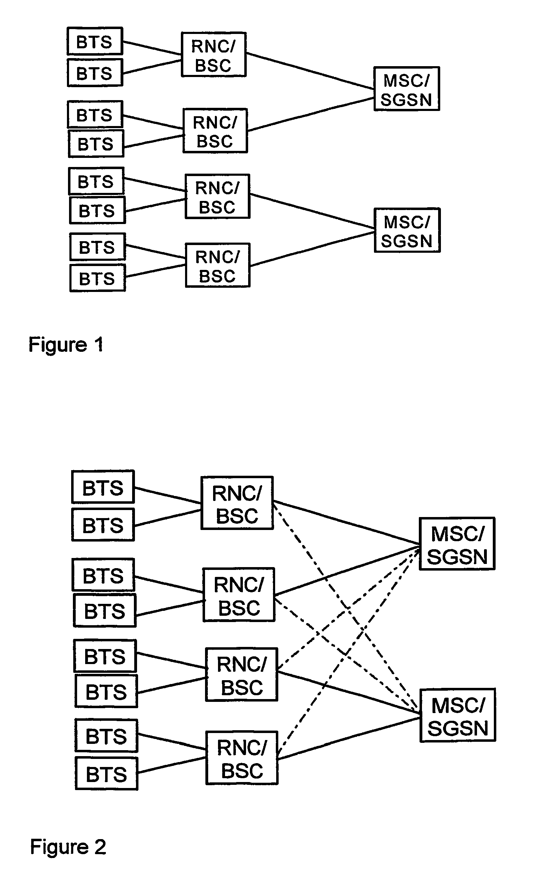

Until now, a radio network node is connected towards one and only one core network node in a certain domain, as shown in figure 1. A radio network node is either an RNC (Radio Network Controller) or a BSC (Base Station Controller). A core network node is an SGSN (Serving General Packet Radio Service Support Node) when it is located in the packet switched domain, and it is an MSC (Mobile Services Switching Centre) when it is located in the circuit switched domain. Note that an RNC or a BSC can be connected to both an MSC and an SGSN, but not to two MSCs or to two SGSNs.

An example of such a system may be seen in WO 00/31 995 A1.

3GPP (3rd Generation Partnership Project), which is a standardisation body, is now looking at a concept where a radio network node can be connected towards several core network nodes of the same domain, as shown in figure 2. Such a system is for example disclosed in ETSI TS 123.060 v3.6.0.

The idea is to place several core network nodes in a pool, and that all of them cover the same geographical area, which then can be bigger than the area previously covered by a core network node. As long as an MS is located within the pool area, the MS will be attached to the same core network node. This has several advantages, e.g. better load sharing between core network nodes, reduced signalling in the core network, better in service performance, better scalability and easier upgrade of the nodes. Also, it opens up for several operators to share the radio network, or parts of it, while still having separate core network nodes. This is especially useful for operators which have a 2G (2nd Generation) network, but who did not receive licences for a 3G (3rd Generation) network, or vice versa. The sharing of radio network is also useful for operators who want to cut costs. The dotted lines in figure 2 shows what is new with the pool concept, i.e. that an RNC or a BSC can be connected to two or more SGSNs and/or to two or more MSCs.

The complexity related to routing of the information received from the MS (Mobile Subscriber) to the correct core network node increases however, as the RNC or the BSC now has to determine which of the SGSNs or MSCs should receive the information that was sent from the MS. The MS is connected to one of the BTSs (Base Transciever Station).

To enable routing of the signalling messages and the data received from the MSs to the correct core network node, (a part of) a parameter that is assigned to the MS will contain information on which core network node allocated the parameter. This information is then included, when needed, in the information sent from the MS to the core network node. The radio network node uses this (part of a) parameter to tell which core network node the MS is (or should/could be) connected to, and hence routes the information received from the MS to the correct core network node. This parameter will most likely be the temporary identity that identifies the MS uniquely in a node, i.e. the TMSI (Temporary Mobile Subscriber Identity) in the CS (Circuit Switched) domain and the P-TMSI (Packet TMSI) in the PS (Packet Switched) domain.

In GSM (Global System for Mobile Communication) GPRS (General Packet Radio Service) the P-TMSI is used as a base for the TLLI (Temporary Logical Link Identity) parameter. Therefore, the bits in the P-TMSI used to indicate which SGSN allocated the P-TMSI will also be available in the TLLI to identify the same SGSN. Since the TLLI is sent in all data and signalling messages from the MS, the TLLI will be used by the BSC to route the information from the MS to the correct SGSN. Other parameters, e.g. the Routing Area (RA), can also be used in combination with this parameter to decide if the MS has already been connected to an SGSN of this pool area when an initial request is made from the MS, e.g. Routing Area Update Request or Attach Request. The disadvantage of the BSC using the Routing Area is that the BSC then has to open messages of a protocol layer it is not meant to look into.

In UMTS (Universal Mobile Telecommunication System) GPRS the bits of the P-TMSI that tell which SGSN allocated the P-TMSI parameter, are sent in a separate parameter from the MS to the RNC when an initial request (e.g. Attach Request or Routing Area Update Request) is sent from the MS. This parameter is called the Intra Domain NAS Node Selector (IDNNS), and this is used in the RNC to decide which SGSN the MS should be connected to. NAS stands for Non Access Stratum.

Other parameters (e.g. Routing Area) can also be used to decide if the MS has already been connected to an SGSN of this pool area. The disadvantage of the RNC using the Routing Area is that the RNC then has to open messages of a protocol layer it is not meant to look into.

When the RNC receives an initial request, it will establish a signalling link towards an SGSN. Later, signalling messages sent between the RNC and the SGSN will be sent on this link. (Note that this signalling link might be released although the PDP (Packet Data Protocol) contexts in the MS, the SGSN and the GGSN can remain.)

When a PDP context is established in UMTS GPRS, two GTP (GPRS Tunnelling Protocol) tunnels are established between the RNC and the SGSN (one GTP tunnel from the RNC to the SGSN, and one GTP tunnel in the opposite direction). These two GTP tunnels are used to forward payload traffic between the RNC and the SGSN.

In general, the principle in a pool area is that the RNC/BSC can select any core network node within its pool area when an MS enters the pool area and performs an initial request (e.g. Attach Request). If the core network node to which the MS was last connected is located in the current pool area, the RNC/BSC should preferably select the same core network node.

In a network configuration where two or more operators share the radio network but has their own core network nodes, the radio network however cannot select any core network node within its pool area when an MS enters the pool area. If the MS has a subscription from one of the operators sharing the radio network, the radio network node has to select a core network node belonging to the correct operator. The problem is that the radio network node will not in the general case receive any parameter that can identify which PLMN (Public Land Mobile Network) the MS belongs to. The radio network therefore has to select any of the core network nodes by random. This can lead to that a core network node of a wrong PLMN is selected.

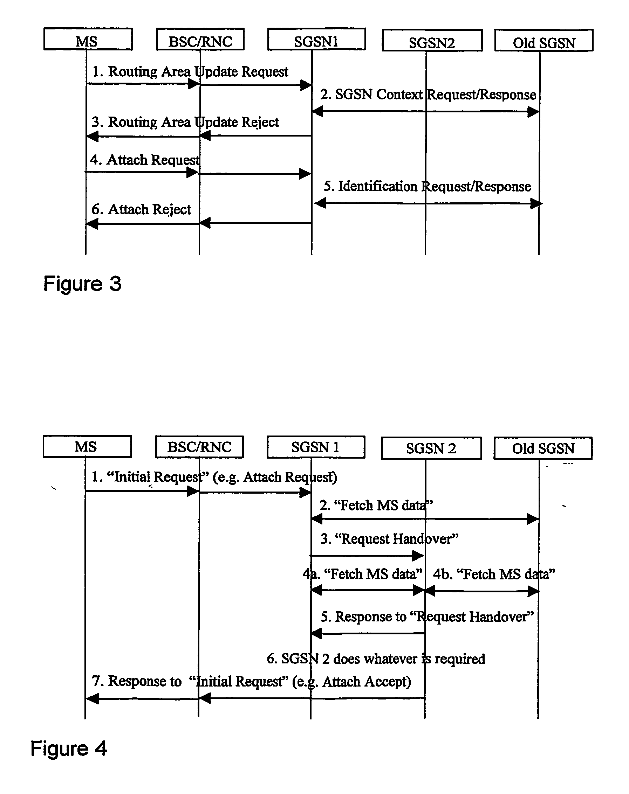

This problem is shown in figure 3. Here, the MS has a subscription at operator 2, and operator 2 owns SGSN 2. When entering the pool area where operator 2 shares the radio network with operator 1, the BSC/RNC forwards the initial request to SGSN 1, and SGSN 1 belongs to operator 1. SGSN 1 is not allowed to handle MSs of operator 2, and therefore SGSN 1 will continuously reject the requests from the MS.

In figure 3, the MS sends a Routing Area Update Request when entering the new pool. The same will however happen if the MS sends an Attach Request when entering the pool.

In step 1 the MS with a subscription at operator 2 roams into a new area with a pool of two SGSNs. SGSN 1 belongs to operator 1, and SGSN 2 belongs to operator 2. The two operators share the radio network. When the MS sends the Routing Area Update Request, the BSC/RNC uses the TLLI/IDNNS parameter when selecting an SGSN. In the general case, neither of these parameters will indicate to the BSC/RNC which SGSN should handle this MS. Therefore the BSC/RNC forwards the request by random, and the choice happens to be on SGSN 1.

SGSN 1 uses the old RA (and possibly the old P-TMSI) received in the Routing Area Update Request to determine which SGSN the MS previously was attached to. In step 2 SGSN 1 sends an SGSN Context Request message to the old SGSN. The old SGSN uses the old P-TMSI parameter to fetch the MM (Mobility Management) Context data and the PDP (Packet Data Protocol) Contexts of the MS. These are then returned to SGSN 1 in an SGSN Context Response message.

SGSN 1 looks at the received IMSI (International Mobile Subscriber Identity) parameter, and determines that the MS belongs to the other operator. Since SGSN 1 is not allowed to handle this MS, it sends a Routing Area Update Reject message to the MS. The MS will then still be connected to the old SGSN, i.e. there is no change in the point of attachment from the MS to the old SGSN.

The MS may later repeat step 1 to step 3, but this can again end up with the same result.

When the MS in the end looses the contact towards the radio network of the old SGSN, the MS can send an Attach Request in the new pool area as shown in step 4. When the MS sends the Attach Request, the BSC/RNC uses the TLLI/IDNNS parameter when selecting an SGSN. In the general case, neither of these parameters will indicate to the BSC/RNC which SGSN should handle this MS. Therefore the BSC/RNC forwards the request by random, and the choice happens to be on SGSN 1.

SGSN 1 uses the old RA (and possibly the old P-TMSI) received in the Attach Request to determine which SGSN the MS previously was attached to. In step 5, SGSN 1 sends an Identification Request message to the old SGSN. The old SGSN uses the old P-TMSI parameter to fetch the IMSI (International Mobile Subscriber Identity) and the authentication data of the MS. These are then returned to SGSN 1 in an Identification Response message.

SGSN 1 looks at the received IMSI (International Mobile Subscriber Identity) parameter, and determines that the MS belongs to the other operator. Since SGSN 1 is not allowed to handle this MS, it sends an Attach Reject message to the MS. This is shown in step 6.

The MS could in the end send an Attach Request message using the IMSI parameter to identify itself instead of the P-TMSI parameter. However, the BSC/RNC should not look into the protocol layer where this parameter is sent, and therefore the BSC/RNC will select an SGSN by random again. This can of course again result in that SGSN 1 is selected, and we have the same result.

As can be understood from the above paragraph, the BSC/RNC can determine which SGSN the MS should get connected to when the MS performs an Attach Request with IMSI. An effect of this however, will be that the MS must always detach and attach again before the situation is resolved. The result is therefore that the MS must always abort his ongoing sessions when such a traffic scenario occurs. Therefore this would not be a good solution.

### General sequence for changing core network node, Fig. 4

Note that some of the steps can be done in another order without influencing the invention.

In step 1 the MS sends an "Initial Request" (e.g. an Attach Request). The BSC/RNC uses the TLLI/IDNNS parameter when selecting an SGSN. In the general case, neither of these parameters will indicate to the BSC/RNC which SGSN should handle this MS. Therefore the BSC/RNC forwards the request by random, and the choice happens to be SGSN 1.

SGSN 1 uses the old RA (and possibly the old P-TMSI) received in the "Initial Request" to determine which SGSN the MS previously was attached to, the old SGSN. In step 2, SGSN 1 requests the MS data from the old SGSN. The old SGSN uses the old P-TMSI parameter to find the data of the MS, e.g. the MM (Mobility Management) Context data (and the PDP Context data if relevant). These are then returned to SGSN 1.

SGSN 1 looks at one of the fixed parameters for the MS, preferably the received IMSI (International Mobile Subscriber Identity) parameter, and determines that the MS belongs to another operator of this pool. SGSN 1 can here include a new analysis on a parameter that is fixed for the MS, preferably on the IMSI, to determine which other SGSN should handle this MS. Alternatively, SGSN 1 can have it configured by Operation and Maintenance which other SGSN should handle this MS, i.e. by having configured one or more default SGSN to contact. Since SGSN 1 is not allowed to handle this MS, it sends a "Request Handover" message to a SGSN of the correct operator, SGSN 2. This is shown in step 3. This message should preferably contain information on which CN node sent the message, and which RAN node the "Initial Request" was received from, as well as a parameter that is fixed for the MS, preferably the IMSI and/or the old P-TMSI together with the old RA (old P-TMSI and old RA is not fixed for the MS). Also the address of the old SGSN can be included. This message could also contain the MS data (in case the MS data is included, step 4a and step 4b are omitted), but preferably it should not. The complete "Initial Request" message should preferably be forwarded from SGSN 1 to SGSN 2, either in a separate message or included in the "Request Handover" message. Alternatively, only the required parameters are sent over to SGSN 2 in this "Request Handover" message or in another new message.

In step 4, SGSN 2 receives or requests the MS data. This is either fetched from SGSN 1 as shown in step 4a, or it is fetched from the old SGSN as shown in step 4b. If step 4b is done and the "Initial Request" is a Routing Area Update Request, SGSN 1 should preferably indicate to the old SGSN that the transfer of the MS from the old SGSN to SGSN 1 was unsuccessful, when this is possible and applicable. This indication should preferably be sent, from SGSN 1 to the old SGSN, before SGSN 1 sends the "Request Handover" message to SGSN 2.

In step 5, which is optional, SGSN 2 informs SGSN 1 that SGSN 2 will handle the MS. SGSN 1 will then clean up the resources temporarily used to handle this MS.

In step 6, SGSN 2 sets up, signals, or fetches whatever is required. In UMTS GPRS this will at least include setting up a signalling connection over the Iu interface, i.e. between SGSN 2 and the RNC.

In step 7, SGSN 2 will inform the MS that the "Initial Request" was successful. In this message SGSN 2 will normally allocate a new P-TMSI value to the MS, so that the next messages from the MS will be sent to the correct SGSN, SGSN 2.

### Method for how the new SGSN (SGSN 2) shall identify which RAN node forwarded the "Initial Request" to the first SGSN (SGSN 1)

In figure 4, SGSN 2 must know which RAN node to contact when setting up the signalling connection in UMTS, and when sending the response on the "Initial Request" to the MS. The proposed solutions are different in GSM GPRS and in UMTS, as different kind of data is available.

In UMTS, SGSN 1 should preferably send the 'Global RNC-ID' (Radio Network Controller Identifier) to SGSN 2. Alternatively, SGSN 1 could send the 'LAI' (Location Area Identity) and the 'RAC' (Routing Area Code). Yet another alternative is that SGSN 1 sends the 'SAI' (Service Area Identifier). SGSN 2 can use either of these parameters or a combination of them to determine which RAN node to contact.

In GSM GPRS, SGSN 1 should preferably send the 'Cell Identifier' to SGSN 2. Alternatively, SGSN 1 could send the 'BVCI' (BSSGP Virtual Connection Identifier, where BSSGP stands for BSS GPRS Protocol, and here BSS stands for Base Station System, and GPRS stands for General Packet Radio Service) and/or the 'NSEI' (Network Service Equipment Identifier). Since the NSEI is a 2 octets string and not a globally unique identifier, this parameter should preferably be structured in a new way when the operator configures the path between the RAN node and the SGSN. One part of the NSEI should identify the SGSN and another part of the NSEI should identify the RAN node. In this way, SGSN 2 can immediately say which RAN node the "Initial Request" was sent through. SGSN 2 can use either of these parameters or a combination of them to determine which RAN node to contact.

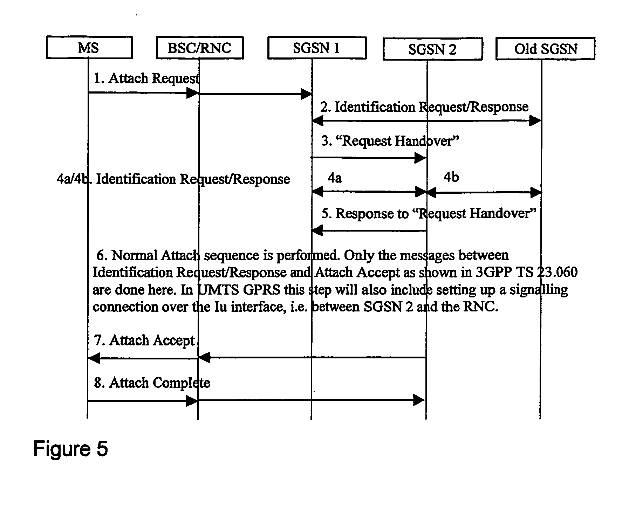

### Sequence for the Attach procedure, Fig. 5

Note that some of the steps can be done in another order without influencing the invention.

In step 1 the MS sends an Attach Request. The BSC/RNC uses the TLLI/IDNNS parameter when selecting an SGSN. In the general case, neither of these parameters will indicate to the BSC/RNC which SGSN should handle this MS. Therefore the BSC/RNC forwards the request by random, and the choice happens to be SGSN 1.

SGSN 1 uses the old RA (and possibly the old P-TMSI) received in the "Initial Request" to determine which SGSN the MS previously was attached to, the old SGSN. In step 2, SGSN 1 requests the MS data from the old SGSN. The old SGSN uses the old P-TMSI parameter to find the data of the MS. The IMSI and the authentication data are then returned to SGSN 1 in an Identification Response message.

SGSN 1 looks at one of the fixed parameters for the MS, preferably the received IMSI (International Mobile Subscriber Identity) parameter, and determines that the MS belongs to another operator of this pool. SGSN 1 can here include a new analysis on a parameter that is fixed for the MS, preferably on the IMSI, to determine which SGSN should handle this MS. Alternatively, SGSN 1 can have it configured by Operation and Maintenance which other SGSN should handle this MS, i.e. by having configured one or more default SGSN to contact. Since SGSN 1 is not allowed to handle this MS, it sends a "Request Handover" message to a SGSN of the correct operator, SGSN 2. This is shown in step 3. This message should preferably contain information on which CN node sent the message, and which RAN node the "Initial Request" was received from, as well as a parameter that is fixed for the MS, preferably the IMSI and/or the old P-TMSI together with the old RA. Also the address of the old SGSN can be included. This message could also-contain the MS data (in case the MS data is included, step 4a and step 4b are omitted), but preferably it should not. The complete Attach Request message should preferably be forwarded from SGSN 1 to SGSN 2, either in a separate message or included in the "Request Handover" message. Alternatively, only the required parameters are sent over to SGSN 2 in this "Request Handover" message or in another new message.

In step 4, SGSN 2 requests the MS data. This is either fetched from SGSN 1 as shown in step 4a, or it is fetched from the old SGSN as shown in step 4b.

In step 5, which is optional, SGSN 2 informs SGSN 1 that SGSN 2 will handle the MS. SGSN 1 will then clean up the resources temporarily used to handle this MS.

In step 6, a normal Attach sequence is performed. Only the messages between Identification Request/Response and Attach Accept as shown in 3GPP TS 23.060 are done here. In UMTS GPRS this step will also include setting up a signalling connection over the Iu interface, i.e. between SGSN 2 and the RNC.

In step 7, SGSN 2 will inform the MS that the Attach procedure was successful. In this message SGSN 2 will normally allocate a new P-TMSI value to the MS, so that the next messages from the MS will be sent to the correct SGSN, SGSN 2.

In step 8, the MS sends an Attach Complete message to SGSN 2.

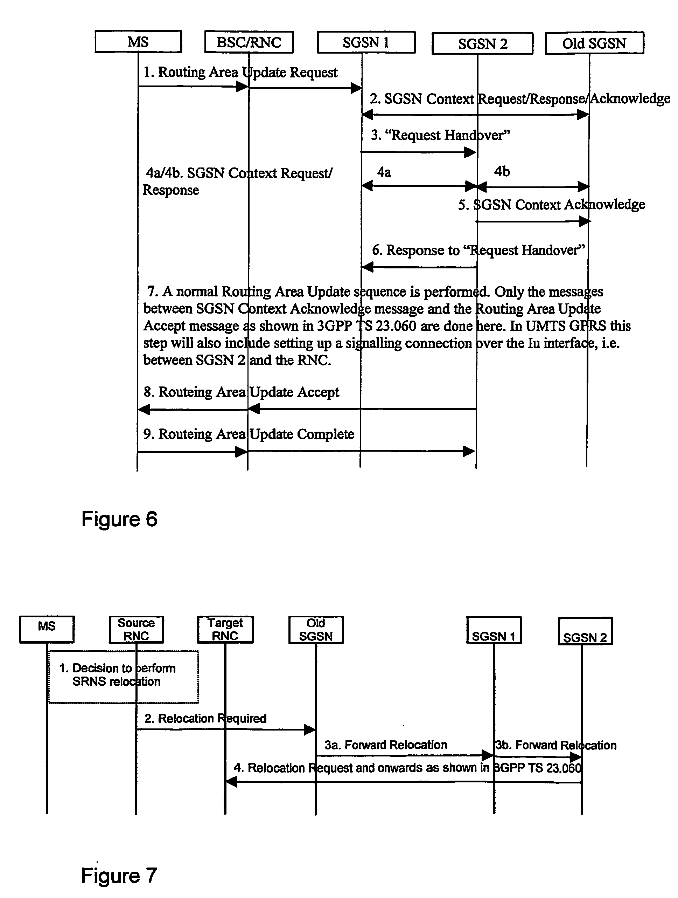

### Sequence for the Routing Area Update procedure, Fig. 6

Note that some of the steps can be done in another order without influencing the invention.

In step 1 the MS sends a Routing Area Update Request. The BSC/RNC uses the TLLI/IDNNS parameter when selecting an SGSN. In the general case, neither of these parameters will indicate to the BSC/RNC which SGSN should handle this MS. Therefore the BSC/RNC forwards the request by random, and the choice happens to be SGSN 1.

SGSN 1 uses the old RA (and possibly the old P-TMSI) received in the "Initial Request" to determine which SGSN the MS previously was attached to, the old SGSN. In step 2, SGSN 1 requests the MS data from the old SGSN. The old SGSN uses the old P-TMSI parameter to find the MM (Mobility Management) Context data (and the PDP (Packet Data Protocol) Context data if relevant) of the MS. These are then returned to SGSN 1 in an SGSN Context Response message. SGSN 1 looks at one of the fixed parameters for the MS, preferably the received IMSI (International Mobile Subscriber Identity) parameter, and determines that the MS belongs to another operator of this pool. SGSN 1 can then optionally send an SGSN Context Acknowledge message to the old SGSN and indicate that the transfer of the MS was unsuccessful. If this is done, step 4b is done instead of step 4a.

SGSN 1 can include a new analysis on a parameter that is fixed for the MS, preferably on the IMSI, to determine which SGSN should handle this MS. Alternatively, SGSN 1 can have it configured by Operation and Maintenance which other SGSN should handle this MS, i.e. by having configured one or more default SGSN to contact. Since SGSN 1 is not allowed to handle this MS, it sends a "Request Handover" message to a SGSN of the correct operator, SGSN 2. This is shown in step 3. This message should preferably contain information on which CN node sent the message, and which RAN node the Routing Area Update Request message was received from, as well as a parameter that is fixed for the MS, preferably the IMSI and/or the old P-TMSI together with the old RA. Also the address of the old SGSN can be included. This message could also contain the MS data (in case the MS data is included, step 4a and step 4b are omitted), but preferably it should not. The complete Routing Area Update Request message should preferably be forwarded from SGSN 1 to SGSN 2, either in a separate message or included in the "Request Handover" message. Alternatively, only the required parameters are sent over to SGSN 2 in this "Request Handover" message or in another new message.

In step 4, SGSN 2 requests the MS data. This is either fetched from SGSN 1 as shown in step 4a, or it is fetched from the old SGSN as shown in step 4b. If step 4b is done, SGSN 1 should preferably indicate, by sending the SGSN Context Acknowledge message, to the old SGSN that the transfer of the MS from the old SGSN to SGSN 1 was unsuccessful in step 2.

In step 5, SGSN 2 sends an SGSN Context Acknowledge message to the old SGSN. In GSM GPRS this informs the old SGSN that SGSN 2 is ready to receive data packets belonging to the activated PDP contexts.

In step 6, SGSN 2 informs SGSN 1 that SGSN 2 will handle the MS. SGSN 1 will then clean up the resources temporarily used to handle this MS.

In step 7, a normal Routing Area Update sequence is performed. Only the messages between SGSN Context Acknowledge message and the Routing Area Update Accept message as shown in 3GPP TS 23.060 are done here. In UMTS GPRS this step will also include setting up a signalling connection over the Iu interface, i.e. between SGSN 2 and the RNC.

In step 8, SGSN 2 will inform the MS that the Routeing Area Update procedure was successful. In this message SGSN 2 will normally allocate a new P-TMSI value to the MS, so that the next messages from the MS will be sent to the correct SGSN, SGSN 2.

In step 9, the MS sends a Routeing Area Update Complete message to SGSN 2.

### Sequence for the SRNS Relocation procedure, Fig. 7

The source or serving RNC decides to perform/initiate an SRNS (Serving Radio Network Subsystem) relocation, as shown in 3GPP TS 23.060.

2) The source RNC initiates the relocation preparation procedure by sending a Relocation Required to the old SGSN, as shown in 3GPP TS 23.060.

3a) The old SGSN initiates the relocation resource allocation procedure by sending a Forward Relocation Request message to SGSN 1, as shown in 3GPP TS 23.060.

3b) SGSN 1 looks at one of the fixed parameters for the MS, preferably the received IMSI (International Mobile Subscriber Identity) parameter, and determines that the MS belongs to another operator of this pool. SGSN 1 can here include a new analysis on a parameter that is fixed for the MS, preferably on the IMSI, to determine which SGSN should handle this MS. Alternatively, SGSN 1 can have it configured by Operation and Maintenance which other SGSN should handle this MS, i.e. by having configured one or more default SGSN of other PhMN(s) to contact. Since SGSN 1 is not allowed to handle this MS, it forwards the Forward Relocation Request message to a SGSN of the correct operator, SGSN 2.

This step is new. It is already discussed within 3GPP that an SGSN can forward this message to a new SGSN, but it is not discussed that an SGSN can have an analysis on the IMSI parameter in order to select a SGSN of the correct PLMN, alternatively to have configured one or more default SGSN of another PLMN to contact.

SGSN 2 sends a Relocation Request message to the target RNC. From this step and onwards, the procedure is as shown in 3GPP TS 23.060.

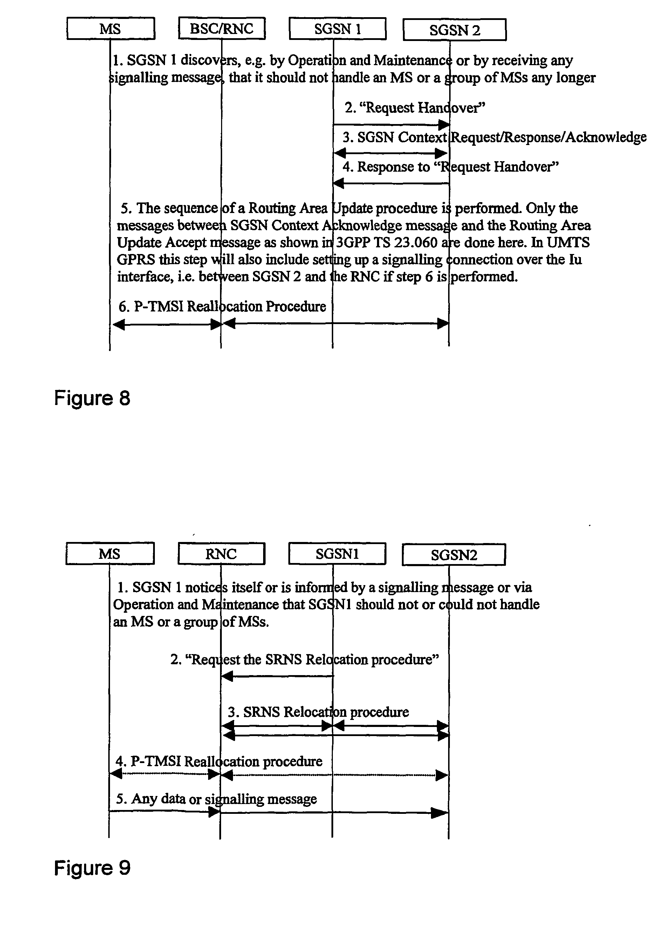

### Sequence for handover of MS data to a new SGSN, Fig. 8

Note that some of the steps can be done in another order without influencing the invention.

This sequence is preferred for a GSM GPRS MS, or for a UMTS GPRS MS in mobility state PMM-idle (Packet Mobility Management), but can also be used for a UMTS GPRS MS in mobility state PMM-connected.

In step 1, SGSN 1 discovers, e.g. by Operation and Maintenance or by receiving any signalling message or by some internal happening, that it cannot or should not handle an MS or a group of MSs any longer.

In step 2, SGSN 1 sends a "Request Handover" message to another SGSN, SGSN 2. This message should preferably contain information on which CN node sent the message, and which RAN node is used for the MS, as well as a parameter that is fixed for the MS, preferably the IMSI and/or the old P-TMSI together with the old RA. This message could also contain the MS data (in case the MS data is included, step 3 is omitted), but preferably it should not.

In step 3, SGSN 2 requests the MS data from SGSN 1. If the MS has activated any PDP contexts, SGSN 2 sends an SGSN Context Acknowledge message to SGSN 1. In GSM GPRS this informs the old SGSN that SGSN 2 is ready to receive data packets belonging to the activated PDP contexts.

In step 4, which is optional, SGSN 2 informs SGSN 1 that SGSN 2 will handle the MS. SGSN 1 will then clean up the resources temporarily used to handle this MS.

In step 5, the sequence of a Routing Area Update procedure is performed. Only the messages between SGSN Context Acknowledge message and the Routing Area Update Accept message as shown in 3GPP TS 23.060 are done here. In UMTS GPRS this step will also include setting up a signalling connection over the Iu interface, i.e. between SGSN 2 and the RNC if step 6 is performed.

Step 6 is optional and it is only performed in case SGSN 2 should allocate a new P-TMSI value to the MS.

### Sequence for handover of UMTS GPRS MS, Fig. 9

This sequence is preferred for a UMTS GPRS MS in mobility state PMM-connected.

In step 1, SGSN 1 notices itself or is informed by a signalling message or via Operation and Maintenance that SGSN 1 should not or could not handle an MS or a group of MSs.

In step 2, SGSN 1 requests the source RNC to perform an SRNS Relocation procedure.

In step 3, the source RNC initiates the SRNS Relocation procedure (as described in 3GPP TS 23.060) for the indicated MS. This means that the MM contexts and the PDP contexts for the MSs are moved from SGSN 1 to SGSN 2. This procedure can be performed with and without MS involvement, but here it should preferably be done without MS involvement. Also, the existing procedure can be modified slightly so that no messages are sent towards the MS in this case. As stated in the previous sentence, the SRNS Relocation procedure is an existing procedure that here is suggested to be used in a new way. It is also suggested that the target RNC in the Relocation Required message (which is the first message being sent in this procedure, and it is sent from the source RNC to the source SGSN, SGSN 1) should be set equal to the source RNC. In this way the RNC is not changed, only the SGSN. (Today this procedure involves two different RNCs, the source RNC and the target RNC.)

Today the source SGSN (SGSN 1) uses the target RNC or the target ID to decide which SGSN should be the target SGSN (i.e. the new SGSN). When using the SRNS Relocation procedure for this purpose, the RNC could include an additional and new parameter in the Relocation Required message to indicate which SGSN the MS should be attached to after the SRNS Relocation procedure. This could be helpful e.g. in the case where the RNC has the knowledge of the load of the different SGSNs in the pool area. Alternatively, the source SGSN can itself figure out which SGSN should be the target SGSN.

Step 4 is optional, and it is only done to supply a new P-TMSI value to the MS. This can e.g. be done with the P-TMSI Reallocation procedure (for simplicity, the whole procedure is not shown here, but it can be found in 3GPP TS 23.060).

In step 5 the RNC routes the next data or signalling message received from the MS to the new SGSN, SGSN 2.

Although the invention in most scenarios describe solutions for a network where two or more operators have separate CN nodes while sharing one or more RAN nodes, this invention is also applicable for the more general case when a radio network node is connected to several core network nodes. Some parts of the invention is even applicable when each of the RAN nodes are only connected to one CN node in a domain.

The invention is applicable for any packet switched mobile telephony system. In particular, one can mention both GSM (Global System for Mobile Communication) and UMTS (Universal Mobile Telecommunication System).

The invention could also be applicable in the circuit switched domain.

In this invention, as described above, a part of the P-TMSI parameter (and therefore also the TLLI parameter in GSM GPRS) is used to identify which core network node the MS should be connected to. Other parameters might be used for this purpose.

## Claims

1. A method for a first Core Network node (SGSN 1) of a mobile telecommunication system, said system including a Mobile Station (MS) attached to the first Core Network node (SGSN 1), a Radio Access Network node (RNC/BSC) and a second Core Network node (SGSN 2), **characterized in that**
whenever the first Core Network node (SGSN 1) determines that it should not or could not handle said Mobile Station (MS) at the Radio Access Network node (RNC/BSC) any longer, sending a Request Handover message to the second Core Network node (SGSN 2) in order to request the second Core Network node (SGSN 2) to handle, at the Radio Access Network node (RNC/BSC), the Mobile Station (MS).

2. A method according to claim 1, **characterized in that** the determination is provoked by an Initial Request sent by the Mobile Station (MS) to the Radio Access Network node (RNC/BSC) and being forwarded to the first Core Network node (SGSN 1).

3. A method as claimed in claim 2, **characterized in that** the first Core Network node (SGSN 1), in order to determine if the Mobile Station (MS) can or should be handled is adapted to determine the address of the Core Network node to which the Mobile Station (MS) has been connected previously and fetch or receive Mobile Station (MS) data from said previously connected Core Network node.

4. A method as claimed in any of the preceding claims, **characterized in that** the first Core Network node (SGSN 1) is adapted to detect which operator the Mobile Station (MS) belongs to, and to send the Request Handover message to said second Core Network node (SGSN 2) belonging to said operator.

5. A method as claimed in claim 4, **characterized in that** the first Core Network node (SGSN 1) is adapted to detect which operator the Mobile Station (MS) belongs to by performing an analysis on a parameter that is fixed for the Mobile Station.

6. A method as claimed in claim 5, **characterized in that** said parameter is the International Mobile Subscriber Identity parameter.

7. A method as claimed in one of the preceding claims, **characterized in that** the first Core Network node (SGSN 1) is adapted to send the Request Handover message to a second Core Network node (SGSN 2) based on load information of the different Core Network nodes.

8. A method as claimed in one of the claims 1-6, **characterized in that** the first Core Network node (SGSN 1) is adapted to send the Request Handover message to a default second Core Network node (SGSN 2).

9. A method as claimed in one of the preceding claims, **characterized in that** in said Request Handover message an address, or an identity, of the first Core Network node (SGSN 1) is included.

10. A method as claimed in one of the preceding claims, **characterized in that** in said Request Handover message a parameter is included that can be used to find the involved Radio Access Network node, or that directly identifies the involved Radio Access Network node.

11. A method as claimed in one of the claims 1-9, **characterized in that** in said Request Handover message is included a parameter that can be used to find the area in which the Mobile Station (MS) is currently located.

12. A method as claimed in one of the claims 1-9, **characterized in that** said first Core Network node (SGSN 1) sends a second message to said second Core Network node (SGSN 2) after said Request Handover message is sent, within this said message a parameter is included that can be used to find the involved Radio Access Network node, or a parameter that directly identifies the involved Radio Access Network node.

13. A method as claimed in one of the claims 1-9, **characterized in that** said first Core Network node (SGSN 1) sends a second message to said second Core Network node (SGSN 2) after said Request Handover message is sent, within this said message a parameter is included that can be used to find the area in which the Mobile Station (MS) is currently located.

14. A method as claimed in claims 10-13, **characterized in that** said parameter comprises at least one of a Global Radio Network Controller Identifier, the Location Area Identity, the Service Area Identifier, the Cell Identifier to identify the involved Radio Access Network node (RNC/BSC) or the area where the Mobile Station (MS) is currently located.

15. A method as claimed in claims10-13, **characterized in that** the network is a GPRS network and said parameter comprises the Base Station System General Packet Radio Service Protocol Virtual Connection Identifier and / or the Network Service Equipment Identifier to said second Core Network node (SGSN 2) to identify the involved Radio Access Network node (RNC/BSC) or the area where the Mobile Station (MS) is currently located.

16. A method as claimed in claims 10-13, **characterized in that** the network is a GSM network, the said parameter comprises the Network Service Equipment Identifier parameter, which parameter is structured so that one part identifies the first Core Network node (SGSN 1), and another part of the parameter identifies the Radio Access Network node.

17. A method as claimed in one of the claims 1-9, **characterized in that** in said Request Handover message the Temporary Mobile Subscriber Identity of the Mobile Station (MS) is included.

18. A method as claimed in claim 17, **characterized in that** in said Request Handover message the associated Location Area (LA) of the Mobile Station (MS) is included.

19. A method as claimed in one of the claims 1-9, **characterized in that** in said Request Handover message the Packet Temporary Mobile Subscriber Identity of the Mobile Station (MS) is included.

20. A method as claimed in claim 19, **characterized in that** in said Request Handover message comprises at least one of the associated Routing Area (RA), the International Mobile Subscriber Identity of the Mobile Station (MS) is included.

21. A method as claimed in one of the claims 2-20, **characterized in that** said Initial Request is one of an Attach Request, a Routing Area Update Request, or a Location Area Update Request.

22. A method for a first Core Network Node (SGSN 1) of a mobile telecommunication system, said system including a Mobile Station (MS) connected to or attached to the first Core Network node (SGSN 1), a Radio Access Network node (RNC/BSC) and a second Core Network node (SGSN 2), **characterized in that**
whenever the first Core Network node (SGSN 1) determines that it can not or should not handle said Mobile Station (MS) at the Radio Access Network node (RNC/BSC) any longer, requesting the Radio Access Network node (RNC/BSC) to perform a procedure in order to move the Mobile Station (MS) attachment to another Core Network node (SGSN 2) for handling, at the Radio Access Network node (RNC/BSC), the Mobile Station (MS).

23. A method as claimed in claim 22, comprising receiving a message from the Radio Access Network node upon said requesting the Radio Access Network node (RNC/BSC) to perform a procedure in order to move the Mobile Station (MS) attachment and sending a message to the second Core Network node.

24. A method as claimed in claim 23, wherein the requested procedure is a Serving Radio Network Subsystem relocation procedure and the message received from the Radio Access Network is a Relocation Required message and the message sent to said second Core Network node is a Forward Relocation Request message.

25. A method as claimed in claim 24, **characterized in that** during said Serving Radio Network Subsystem Relocation procedure a Relocation Required message from said Radio Access Network node (RNC/BSC) is received, including a parameter identifying which Network node (SGSN 2) the Mobile Station (MS) should become connected to.

26. A method as claimed in claim 24, **characterized in that** during said Serving Radio Network Subsystem Relocation procedure a Relocation Required message from said Radio Access Network node (RNC/BSC) is received, including a parameter indicating that a change of Network node is required or wanted, deciding thereupon to which Network node should be the target Network node (SGSN 2).

27. A method as claimed in one of the claims 24-26, **characterized in that** said network is a Universal Mobile Telecommunication System General Packet Radio Service mobile communication network.

28. A method as claimed in claim 24, **characterized in that** said Serving Radio Network Subsystem Relocation procedure moves the attachment of the Mobile Station from the first Core Network node to the second Core Network node, in said procedure the target radio network node, or Target ID, is set equal to the source radio network node, or Source ID.

29. A method in a mobile telecommunication system, said system including a Mobile Station (MS), a domain including at least one Radio Access Network node (Target RNC) and a number of Core Network nodes (SGSN 1, SGSN 2), said Radio Access Network node (Target RNC) being connected to at least one Core Network node (SGSN 1, SGSN 2), wherein in order to perform a Serving Radio Network Subsystem relocation, an old Radio Access Network node (Source RNC) to which the Mobile Station (MS) is connected, sends (2) a Relocation Required message to an old Core Network node (old SGSN) to which the Mobile Station (MS) is connected, and said old Core Network node (old SGSN) sends (3a) a Forward Relocation Request message according to 3GPP TS 23.060 to a first Core Network node (SGSN 1) in said domain, **characterized in that**
if said first Core Network node (SGSN 1) determines that the Mobile Station (MS) belongs to or should be handled by a Core Network node of another operator of this domain, it sends (3b) the Forward Relocation Request message to a second Core Network node (SGSN 2) residing in this domain in order to request the second Core Network node (SGSN 2) to handle the Mobile Station (MS), and if the second Core Network node (SGSN 2) determines that the Mobile Station (MS) belongs to or could be handled by a Core Network node of its own operator, it will handle said Mobile Station (MS) further.

30. A method as claimed in claim 29, **characterized in that** if the second Core Network node (SGSN 2) find that it cannot handle the Mobile Station (MS), it is adapted to send (3b) the Forward Relocation Request message to another Core Network node.

31. A method as claimed in claim 29, **characterized in that** if the second Core Network node (SGSN 2) find that it cannot handle the Mobile Station (MS), it is adapted to send a response message rejecting the handover, i.e. Serving Radio Network Subsystem Relocation procedure.

32. A method as claimed in claim 29, **characterized in that** the said first Core Network node (SGSN 1) is adapted to detect which operator the Mobile Station (MS) belongs to by performing an analysis on a parameter that is fixed for the Mobile Station (MS), and send (3a) the Forward Relocation Request message to a second Core Network node (SGSN 2) belonging to this operator.

33. A method as claimed in claim 32, **characterized in that** said parameter is the International Mobile Subscriber Identity parameter.

34. A method as claimed in claim 29, **characterized in that** the first Core Network node (SGSN 1) is adapted to send (3a) the Forward Relocation Request message to a default second Core Network node (SGSN 2).

35. A first Core Network node (SGSN 1) of a mobile telecommunication system, said system including a Mobile Station (MS) attached to the first Core Network node (SGSN 1), a Radio Access Network node (RNC/BSC) and a second Core Network node (SGSN 2), **characterized in that** the node comprises
means for determining that it should not or could not handle said Mobile Station (MS) at the Radio Access Network node (RNC/BSC) any longer,
means for sending a Request Handover message to the second Core Network node (SGSN 2) in order to request the second Core Network node (SGSN 2) to handle, at the Radio Access Network node (RNC/BSC), the Mobile Station (MS).

36. A node according to claim 35, **characterized in that** the node further comprises means for receiving an Initial Request sent by the Mobile Station (MS) to the Radio Access Network node (RNC/BSC) and being forwarded to the first Core Network node (SGSN 1).

37. A node as claimed in claim 36, **characterized in that** the first Core Network node (SGSN 1), in order to determine if the Mobile Station (MS) can or should be handled comprises means for determining the address of Core Network node to which the Mobile Station (MS) has been connected previously and means for fetching or receiving Mobile Station (MS) data from said previously connected Core Network node.

38. A node as claimed in any of the preceding claims 35-37, **characterized in that** the first Core Network node (SGSN 1) comprises means for detecting which operator the Mobile Station (MS) belongs to, and means for sending the Request Handover message to said second Core Network node (SGSN 2) belonging to said operator.

39. A node as claimed in claim 38, **characterized in that** the first Core Network node (SGSN 1) comprises means for detecting which operator the Mobile Station (MS) belongs to by performing an analysis on a parameter that is fixed for the Mobile Station.

40. A node as claimed in claim 39, **characterized in that** said parameter is the International Mobile Subscriber Identity parameter.

41. A node as claimed in one of the preceding claims 35-40, **characterized in that** the first Core Network node (SGSN 1) comprises means for sending the Request Handover message to a second Core Network node (SGSN 2) based on load information of the different Core Network nodes.

42. A node as claimed in one of the claims 35-40, **characterized in that** the first Core Network node (SGSN 1) comprises means for sending the Request Handover message to a default second Core Network node (SGSN 2).

43. A node as claimed in one of the preceding claims 35-42, **characterized in that** in said Request Handover message an address, or an identity, of the first Core Network node (SGSN 1) is included.

44. A node as claimed in one of the preceding claims 35-43, **characterized in that** in said Request Handover message a parameter is included that can be used to find the involved Radio Access Network node, or that directly identifies the involved Radio Access Network node.

45. A node as claimed in one of the claims 35-43, **characterized in that** in said Request Handover message is included a parameter that can be used to find the area in which the Mobile Station (MS) is currently located.

46. A node as claimed in one of the claims 35-43, **characterized in that** said first Core Network node (SGSN 1) comprises means for sending a second message to said second Core Network node (SGSN 2) after said Request Handover message is sent, within this said message a parameter is included that can be used to find the involved Radio Access Network node, or a parameter that directly identifies the involved Radio Access Network node.

47. A node as claimed in one of the claims 35-43, **characterized in that** said first Core Network node (SGSN 1) comprises means for sending a second message to said second Core Network node (SGSN 2) after said Request Handover message is sent, within this said message a parameter is included that can be used to find the area in which the Mobile Station (MS) is currently located.

48. A node as claimed in claims 44-47, **characterized in that** said parameter comprises at least one of a Global Radio Network Controller Identifier, the Location Area Identity, the Service Area Identifier, the Cell Identifier to identify the involved Radio Access Network node (RNC/BSC) or the area where the Mobile Station (MS) is currently located.

49. A node as claimed in claims 44-47, **characterized in that** the network is a GPRS network and said parameter comprises the Base Station System General Packet Radio Service Protocol Virtual Connection Identifier and / or the Network Service Equipment Identifier to said second Core Network node (SGSN 2) to identify the involved Radio Access Network node (RNC/BSC) or the area where the Mobile Station (MS) is currently located.

50. A node as claimed in claims 44-47, **characterized in that** the network is a GSM network, the said parameter comprises the Network Service Equipment Identifier parameter, which parameter is structured so that one part identifies the first Core Network node (SGSN 1), and another part of the parameter identifies the Radio Access Network node.

51. A node as claimed in one of the claims 35-43, **characterized in that** in said Request Handover message the Temporary Mobile Subscriber Identity of the Mobile Station (MS) is included.

52. A node as claimed in claim 51, **characterized in that** in said Request Handover message the associated Location Area (LA) of the Mobile Station (MS) is included.

53. A node as claimed in one of the claims 35-43, **characterized in that** in said Request Handover message the Packet Temporary Mobile Subscriber Identity of the Mobile Station (MS) is included.

54. A node as claimed in claim 53, **characterized in that** in said Request Handover message comprises at least one of the associated Routing Area (RA), the International Mobile Subscriber Identity of the Mobile Station (MS) is included.

55. A node as claimed in one of the claims 36-54, **characterized in that** said Initial Request is one of an Attach Request, a Routing Area Update Request, or a Location Area Update Request.

56. A first Core Network Node (SGSN 1) of a mobile telecommunication system, said system including a Mobile Station (MS) connected to or attached to the first Core Network node (SGSN 1), a Radio Access Network node (RNC/BSC) and a second Core Network node (SGSN 2), **characterized in that** said node first Core Network Node comprises
means for determining that it can not or should not handle said Mobile Station (MS) at the Radio Access Network node (RNC/BSC) any longer,
means for requesting the Radio Access Network node (RNC/BSC) to perform a procedure in order to move the Mobile Station (MS) attachment to another Core Network node (SGSN 2) for handling, at the Radio Access Network node (RNC/BSC), the Mobile Station (MS).

57. A node as claimed in claim 56, wherein the requested procedure is a Serving Radio Network Subsystem relocation procedure and the message received from the Radio Access Network is a Relocation Required message and the message sent to said second Core Network node is a Forward Relocation Request message.

58. A node as claimed in claim 57, **characterized in that** said node comprises
means for receiving during said Serving Radio Network Subsystem Relocation procedure a Relocation Required message from said Radio Access Network node, including a parameter identifying which Network node (SGSN 2) the Mobile Station (MS) should become connected to.

59. A node as claimed in claim 56, **characterized in that** during said Serving Radio Network means for receiving during said Serving Radio Network Subsystem Relocation procedure a Relocation Required message from said Radio Access Network node, including a parameter indicating that a change of Network node is required or wanted, deciding thereupon to which Network node should be the target Network node (SGSN 2).

60. A node as claimed in one of the claims 56-59, **characterized in that** said network is a Universal Mobile Telecommunication System General Packet Radio Service mobile communication network.

## Patentansprüche

1. Verfahren für einen ersten Kernnetzknoten (SGSN 1) eines Mobilkommunikationssystems, wobei das System eine Mobilstation (MS), die an den ersten Kernnetzknoten (SGSN 1) angebunden ist, einen Funkzugangsnetzknoten (RNC/BSC) und einen zweiten Kernnetzknoten (SGSN 2) umfasst, **gekennzeichnet durch**
Senden, wann immer der erste Kernnetzknoten (SGSN 1) bestimmt, dass er die Mobilstation (MS) am Funkzugangsnetzknoten (RNC/BSC) nicht mehr bedienen sollte oder könnte, einer Handover-Anforderungsnachricht an den zweiten Kernnetzknoten (SGSN 2), um den zweiten Kernnetzknoten (SGSN 2) aufzufordern, die Mobilstation (MS) am Funkzugangsnetzknoten (RNC/BSC) zu bedienen.

2. Verfahren nach Anspruch 1, **dadurch gekennzeichnet, dass** die Bestimmung durch eine Erstanforderung ausgelöst wird, die durch die Mobilstation (MS) an den Funkzugangsnetzknoten (RNC/BSC) gesendet und an den ersten Kernnetzknoten (SGSN 1) weitergeleitet wird.

3. Verfahren nach Anspruch 2, **dadurch gekennzeichnet, dass** der erste Kernnetzknoten (SGSN 1) so ausgelegt ist, dass er, um zu bestimmen, ob die Mobilstation (MS) bedient werden kann oder sollte, die Adresse des Kernnetzknotens bestimmt, mit dem die Mobilstation (MS) vorher verbunden war, und Mobilstations (MS)-Daten von dem vorher verbundenen Kernnetzknoten abruft oder empfängt.

4. Verfahren nach einem der vorhergehenden Ansprüche, **dadurch gekennzeichnet, dass** der erste Kernnetzknoten (SGSN 1) so ausgelegt ist, dass er erkennt, zu welchem Betreiber die Mobilstation (MS) gehört, und die Handover-Anforderungsnachricht an den zweiten Kernnetzknoten (SGSN 2) sendet, der zu diesem Betreiber gehört.

5. Verfahren nach Anspruch 4, **dadurch gekennzeichnet, dass** der erste Kernnetzknoten (SGSN 1) so ausgelegt ist, dass ererkennt, zu welchem Betreiber die Mobilstation (MS) gehört, indem er eine Analyse an einem Parameter durchführt, der für die Mobilstation festgelegt ist.

6. Verfahren nach Anspruch 5, **dadurch gekennzeichnet, dass** der Parameter der Parameter der internationalen Mobilteilnehmerkennung ist.

7. Verfahren nach einem der vorhergehenden Ansprüche, **dadurch gekennzeichnet, dass** der erste Kernnetzknoten (SGSN 1) so ausgelegt ist, dass er die Handover-Anforderungsnachricht basierend auf Lastinformationen der verschiedenen Kernnetzknoten an einen zweiten Kernnetzknoten (SGSN 2) sendet.

8. Verfahren nach einem der Ansprüche 1 bis 6, **dadurch gekennzeichnet, dass** der erste Kernnetzknoten (SGSN 1) so ausgelegt ist, dass er die Handover-Anforderungsnachricht an einen vorgegebenen zweiten Kernnetzknoten (SGSN 2) sendet.

9. Verfahren nach einem der vorhergehenden Ansprüche, **dadurch gekennzeichnet, dass** in die Handover-Anforderungsnachricht eine Adresse oder eine Kennung des ersten Kernnetzknotens (SGSN 1) aufgenommen wird.

10. Verfahren nach einem der vorhergehenden Ansprüche, **dadurch gekennzeichnet, dass** in die Handover-Anforderungsnachricht ein Parameter aufgenommen wird, der verwendet werden kann, um den beteiligten Funkzugangsnetzknoten zu ermitteln, oder der den beteiligten Funkzugangsknoten direkt identifiziert.

11. Verfahren nach einem der Ansprüche 1 bis 9, **dadurch gekennzeichnet, dass** in die Handover-Anforderungsnachricht ein Parameter aufgenommen wird, der verwendet werden kann, um das Gebiet zu ermitteln, in dem sich die Mobilstation (MS) gegenwärtig befindet.

12. Verfahren nach einem der Ansprüche 1 bis 9, **dadurch gekennzeichnet, dass** der erste Kernnetzknoten (SGSN 1) nach dem Senden der Handover-Anforderungsnachricht eine zweite Nachricht an den zweiten Kernnetzknoten (SGSN 2) sendet, wobei in diese Nachricht ein Parameter, der verwendet werden kann, um den beteiligten Funkzugangsnetzknoten zu ermitteln, oder ein Parameter aufgenommen wird, der den beteiligten Funkzugangsnetzknoten direkt identifiziert.

13. Verfahren nach einem der Ansprüche 1 bis 9, **dadurch gekennzeichnet, dass** der erste Kernnetzknoten (SGSN 1) nach dem Senden der Handover-Anforderungsnachricht eine zweite Nachricht an den zweiten Kernnetzknoten (SGSN 2) sendet, wobei in diese Nachricht ein Parameter aufgenommen wird, der verwendet werden kann, um das Gebiet zu ermitteln, in dem sich die Mobilstation (MS) gegenwärtig befindet.

14. Verfahren nach einem der Ansprüche 10 bis 13, **dadurch gekennzeichnet, dass** der Parameter mindestens eine von einer globalen Funknetzsteuerungskennung, der Aufenthaltsgebietskennung, der Versorgungsgebietskennung, der Zellkennung umfasst, um den beteiligten Funkzugangsnetzknoten (RNC/BSC) oder das Gebiet, indem sich die Mobilstation (MS) gegenwärtig befindet, zu identifizieren.

15. Verfahren nach einem der Ansprüche 10 bis 13, **dadurch gekennzeichnet, dass** das Netz ein GPRS-Netz ist und der Parameter die Kennung der virtuellen Verbindung des allgemeinen paketvermittelten Funkdienstprotokolls der Basisstation und/oder die Netzdiensteinrichtungskennung für den zweiten Kernnetzknoten (SGSN 2) umfasst, um den beteiligten Funkzugangsnetzknoten (RNC/BSC) oder das Gebiet, in dem sich die Mobilstation (MS) gegenwärtig befindet, zu identifizieren.

16. Verfahren nach einem der Ansprüche 10 bis 13, **dadurch gekennzeichnet, dass** das Netz ein GSM-Netz ist und der Parameter den Parameter der Netzdiensteinrichtungskennung umfasst, wobei der Parameter so aufgebaut ist, dass ein Teil den ersten Kernnetzknoten (SGSN 1) identifiziert und ein anderer Teil des Parameters den Funkzugangsnetzknoten identifiziert.

17. Verfahren nach einem der Ansprüche 1 bis 9, **dadurch gekennzeichnet, dass** in die Handover-Anforderungsnachricht die temporäre Mobilteilnehmerkennung der Mobilstation (MS) aufgenommen wird.

18. Verfahren nach Anspruch 17, **dadurch gekennzeichnet, dass** in die Handover-Anforderungsnachricht das zugeordnete Aufenthaltsgebiet (LA) der Mobilstation (MS) aufgenommen wird.

19. Verfahren nach einem der Ansprüche 1 bis 9, **dadurch gekennzeichnet, dass** in die Handover-Anforderungsnachricht die temporäre Paket-Mobilteilnehmerkennung der Mobilstation (MS) aufgenommen wird.

20. Verfahren nach Anspruch 19, **dadurch gekennzeichnet, dass** in die Handover-Anforderungsnachricht mindestens eines von dem zugeordneten Routing-Gebiet (RA), der internationalen Mobilteilnehmerkennung der Mobilstation (MS) aufgenommen wird.

21. Verfahren nach einem der Ansprüche 2 bis 20, **dadurch gekennzeichnet, dass** die Erstanforderung eine von einer Anbindungsanforderung, einer Routing-Gebiets-Aktualisierungsanforderung oder einer Aufenthaltsaktualisierungsanforderung ist.

22. Verfahren für einen ersten Kernnetzknoten (SGSN 1) eines Mobilkommunikationssystems, wobei das System eine Mobilstation (MS), die mit dem ersten Kernnetzknoten (SGSN 1) verbunden oder daran angebunden ist, einen Funkzugangsnetzknoten (RNC/BSC) und einen zweiten Kernnetzknoten (SGSN 2) umfasst, **dadurch gekennzeichnet, dass**,
wann immer der erste Kernnetzknoten (SGSN 1) bestimmt, dass er die Mobilstation (MS) am Funkzugangsnetzknoten (RNC/BSC) nicht mehr bedienen kann oder sollte, den Funkzugangsnetzknoten (RNC/BSC) auffordert, eine Prozedur durchzuführen, um die Anbindung der Mobilstation (MS) zu einem anderen Kernnetzknoten (SGSN 2) zu verlegen, um die Mobilstation (MS) am Funkzugangsnetzknoten (RNC/BSC) zu bedienen.

23. Verfahren nach Anspruch 22, umfassend ein Empfangen einer Nachricht vom Funkzugangsnetzkoten bei Auffordern des Funkzugangsnetzknotens (RNC/BSC), eine Prozedur durchzuführen, um die Anbindung der Mobilstation (MS) zu verlegen, und Senden einer Nachricht an den zweiten Kernnetzkoten.

24. Verfahren nach Anspruch 23, wobei die angeforderte Prozedur eine Prozedur zur Verlagerung des versorgenden Funknetzsubsystems ist, und die vom Funkzugangsnetzknoten empfangene Nachricht eine Verlagerungsanforderungsnachricht ist, und die an den zweiten Kernnetzknoten gesendete Nachricht eine Vorwärtsverlagerungs-Anforderungsnachricht ist.

25. Verfahren nach Anspruch 24, **dadurch gekennzeichnet, dass** während der Prozedur zur Verlagerung des versorgenden Funknetzsubsystems eine Verlagerungsanforderungsnachricht vom Funkzugangsnetzknoten (RNC/BSC) empfangen wird, die einen Parameter enthält, der identifiziert, mit welchem Netzknoten (SGSN 2) die Mobilstation (MS) verbunden werden sollte.

26. Verfahren nach Anspruch 24, **dadurch gekennzeichnet, dass** während der Prozedur zur Verlagerung des versorgenden Funknetzsubsystems eine Verlagerungsanforderungsnachricht vom Funkzugangsnetzknoten (RNC/BSC) empfangen wird, die einen Parameter enthält, der anzeigt, dass ein Wechsel des Netzknoten angefordert oder gewünscht wird, woraufhin entschieden wird, welcher Netzknoten der Zielnetzknoten (SGN 2) sein sollte.

27. Verfahren nach einem der Ansprüche 24 bis 26, **dadurch gekennzeichnet, dass** das Netz ein Mobilkommunikationsnetz des allgemeinen paketvermittelten Funkdienstes des universellen Mobilfunk-Telekommunikationssystems ist.

28. Verfahren nach Anspruch 24, **dadurch gekennzeichnet, dass** die Prozedur zur Verlagerung des versorgenden Funknetzsubsystems die Anbindung der Mobilstation vom ersten Kernnetzknoten zum zweiten Kernnetzknoten verlegt, wobei in der Prozedur der Ziel-Funknetzknoten oder die Ziel-ID so festgelegt wird, dass er/sie dem Ursprungs-Funknetzknoten bzw. der Ursprungs-ID entspricht.

29. Verfahren in einem Mobilkommunikationssystem, wobei das System eine Mobilstation (MS) und eine Domäne umfasst, die mindesten einen Funkzugangsnetzknoten (Ziel-RNC) und eine Anzahl von Kernnetzknoten (SGSN 1, SGSN 2) umfasst, wobei der Funkzugangsnetzknoten (Ziel-RNC) mit mindestens einem Kernnetzknoten (SGSN 1, SGSN 2) verbunden ist, wobei, um eine Verlagerung des versorgenden Funknetzsubsystems durchzuführen, ein alter Funkzugangsnetzknoten (Ursprungs-RNC), mit dem die Mobilstation (MS) verbunden ist, eine Verlagerungsanforderungsnachricht an einen alten Kernnetzknoten (alten SGSN) sendet (2), der mit der Mobilstation (MS) verbunden ist, und der alte Kernnetzknoten (alte SGSN) eine Vorwärtsverlagerungs-Anforderungsnachricht gemäß 3GPP TS 23.060 an einen ersten Kernnetzknoten (SGSN 1) in der Domäne sendet (3a), **dadurch gekennzeichnet, dass**,
wenn der erste Kernnetzknoten (SGSN 1) bestimmt, dass die Mobilstation (MS) zu einem Kernnetzknoten eines anderen Betreibers dieser Domäne gehört oder von diesem bedient werden sollte, er die Vorwärtsverlagerungs-Anforderungsnachricht an einen zweiten Kernnetzknoten (SGSN 2) sendet (3b), der sich in dieser Domäne befindet, um den zweiten Kernnetzknoten (SGSN 2) aufzufordern, die Mobilstation (MS) zu bedienen, und, wenn der zweite Kernnetzknoten (SGSN 2) bestimmt, dass die Mobilstation (MS) zu einem Kernnetzknoten seines eigenen Betreibers gehört oder von diesem bedient werden könnte, er die Mobilstation (MS) weiter bedient.

30. Verfahren nach Anspruch 29, **dadurch gekennzeichnet, dass**, wenn der zweite Kernnetzknoten (SGSN 2) feststellt, dass er die Mobilstation (MS) nicht bedienen kann, er so ausgelegt ist, dass er die Vorwärtsverlagerungs-Anforderungsnachricht an einen anderen Kernnetzknoten sendet (3b).

31. Verfahren nach Anspruch 29, **dadurch gekennzeichnet, dass**, wenn der zweite Kernnetzknoten (SGSN 2) feststellt, dass er die Mobilstation (MS) nicht bedienen kann, er so ausgelegt ist, dass er Antwortnachricht sendet, die das Handover, d.h. die Prozedur zur Verlagerung des versorgenden Funknetzsubsystems, abweist.

32. Verfahren nach Anspruch 29, **dadurch gekennzeichnet, dass** der erste Kernnetzknoten (SGSN 1) so ausgelegt ist, dass ererkennt, zu welchem Betreiber die Mobilstation (MS) gehört, indem er eine Analyse an einem Parameter durchführt, der für die Mobilstation (MS) festgelegt ist, und die Vorwärtsverlagerungs-Anforderungsnachricht an einen zweiten Kernnetzknoten (SGSN 2) sendet (3a), der zu diesem Betreiber gehört.

33. Verfahren nach Anspruch 32, **dadurch gekennzeichnet, dass** der Parameter der Parameter der internationalen Mobilteilnehmerkennung ist.

34. Verfahren nach einem der Ansprüche 29, **dadurch gekennzeichnet, dass** der erste Kernnetzknoten (SGSN 1) so ausgelegt ist, dass er die Vorwärtsverlagerungs-Anforderungsnachricht an einen vorgegebenen zweiten Kernnetzknoten (SGSN 2) sendet (3a).

35. Erster Kernnetzknoten (SGSN 1) eines Mobilkommunikationssystems, wobei das System eine Mobilstation (MS), die an den ersten Kernnetzknoten (SGSN 1) angebunden ist, einen Funkzugangsnetzknoten (RNC/BSC) und einen zweiten Kernnetzknoten (SGSN 2) umfasst, **dadurch gekennzeichnet, dass** der Knoten umfasst:
Mittel zum Bestimmen, dass er die Mobilstation (MS) am Funkzugangsnetzknoten (RNC/BSC) nicht mehr bedienen sollte oder könnte,
Mittel zum Senden einer Handover-Anforderungsnachricht an den zweiten Kernnetzknoten (SGSN 2), um den zweiten Kernnetzknoten (SGSN 2) aufzufordern, die Mobilstation (MS) am Funkzugangsnetzknoten (RNC/BSC) zu bedienen.

36. Knoten nach Anspruch 35, **dadurch gekennzeichnet, dass** der Knoten ferner Mittel zum Empfangen einer Erstanforderung umfasst, die durch die Mobilstation (MS) an den Funkzugangsnetzknoten (RNC/BSC) gesendet und an den ersten Kernnetzknoten (SGSN 1) weitergeleitet wird.

37. Knoten nach Anspruch 36, **dadurch gekennzeichnet, dass** der erste Kernnetzknoten (SGSN 1), um zu bestimmen, ob die Mobilstation (MS) bedient werden kann oder sollte, Mittel zum Bestimmen der Adresse des Kernnetzknotens, mit dem die Mobilstation (MS) vorher verbunden war, und Mittel zum Abrufen oder Empfangen von Mobilstations (MS)-Daten von dem vorher verbundenen Kernnetzknoten umfasst.

38. Knoten nach einem der vorhergehenden Ansprüche 35 bis 37, **dadurch gekennzeichnet, dass** der erste Kernnetzknoten (SGSN 1) Mittel zum Erkennen, zu welchem Betreiber die Mobilstation (MS) gehört, und Mittel zum Senden der Handover-Anforderungsnachricht an den zweiten Kernnetzknoten (SGSN 2) umfasst, der zu diesem Betreiber gehört.

39. Knoten nach Anspruch 38, **dadurch gekennzeichnet, dass** der erste Kernnetzknoten (SGSN 1) Mittel zum Erkennen, zu welchem Betreiber die Mobilstation (MS) gehört, durch Durchführen einer Analyse an einem Parameter umfasst, der für die Mobilstation festgelegt ist.

40. Knoten nach Anspruch 39, **dadurch gekennzeichnet, dass** der Parameter der Parameter der internationalen Mobilteilnehmerkennung ist.

41. Knoten nach einem der vorhergehenden Ansprüche 35 bis 40, **dadurch gekennzeichnet, dass** der erste Kernnetzknoten SGSN 1) Mittel zum Senden der Handover-Anforderungsnachricht basierend auf Lastinformationen der verschiedenen Kernnetzknoten an einen zweiten Kernnetzknoten (SGSN 2) umfasst.

42. Knoten nach einem der Ansprüche 35 bis 40, **dadurch gekennzeichnet, dass** der erste Kernnetzknoten (SGSN 1) Mittel zum Senden der Handover-Anforderungsnachricht an einen vorgegebenen zweiten Kernnetzknoten (SGSN 2) umfasst.

43. Knoten nach einem der vorhergehenden Ansprüche 35 bis 42, **dadurch gekennzeichnet, dass** in der Handover-Anforderungsnachricht eine Adresse oder eine Kennung des ersten Kernnetzknotens (SGSN 1) enthalten ist.

44. Knoten nach einem der vorhergehenden Ansprüche 35 bis 43, **dadurch gekennzeichnet, dass** in der Handover-Anforderungsnachricht ein Parameter enthalten ist, der verwendet werden kann, um den beteiligten Funkzugangsnetzknoten zu ermitteln, oder der den beteiligten Funkzugangsknoten direkt identifiziert.

45. Knoten nach einem der Ansprüche 35 bis 43, **dadurch gekennzeichnet, dass** in der Handover-Anforderungsnachricht ein Parameter enthalten ist, der verwendet werden kann, um das Gebiet zu ermitteln, in dem sich die Mobilstation (MS) gegenwärtig befindet.

46. Knoten nach einem der Ansprüche 35 bis 43, **dadurch gekennzeichnet, dass** der erste Kernnetzknoten (SGSN 1) Mittel zum Senden einer zweiten Nachricht an den zweiten Kernnetzknoten (SGSN 2) nach dem Senden der Handover-Anforderungsnachricht umfasst, wobei in dieser Nachricht ein Parameter, der verwendet werden kann, um den beteiligten Funkzugangsnetzknoten zu ermitteln, oder ein Parameter enthalten ist, der den beteiligten Funkzugangsnetzknoten direkt identifiziert.

47. Knoten nach einem der Ansprüche 35 bis 43, **dadurch gekennzeichnet, dass** der erste Kernnetzknoten (SGSN 1) Mittel zum Senden einer zweiten Nachricht an den zweiten Kernnetzknoten (SGSN 2) nach dem Senden der Handover-Anforderungsnachricht umfasst, wobei in dieser Nachricht ein Parameter enthalten ist, der verwendet werden kann, um das Gebiet zu ermitteln, in dem sich die Mobilstation (MS) gegenwärtig befindet.

48. Knoten nach Anspruch 44 bis 47, **dadurch gekennzeichnet, dass** der Parameter mindestens eine von einer globalen Funknetzsteuerungskennung, der Aufenthaltsgebietskennung, der Versorgungsgebietskennung, der Zellkennung umfasst, um den beteiligten Funkzugangsnetzknoten (RNC/BSC) oder das Gebiet, indem sich die Mobilstation (MS) gegenwärtig befindet, zu identifizieren.

49. Knoten nach Anspruch 44 bis 47, **dadurch gekennzeichnet, dass** das Netz ein GPRS-Netz ist und der Parameter die Kennung der virtuellen Verbindung des allgemeinen paketvermittelten Funkdienstprotokolls der Basisstation und/oder die Netzdiensteinrichtungskennung für den zweiten Kernnetzknoten (SGSN 2) umfasst, um den beteiligten Funkzugangsnetzknoten (RNC/BSC) oder das Gebiet, in dem sich die Mobilstation (MS) gegenwärtig befindet, zu identifizieren.

50. Knoten nach Anspruch 44 bis 47, **dadurch gekennzeichnet, dass** das Netz ein GSM-Netz ist und der Parameter den Parameter der Netzdiensteinrichtungskennung umfasst, wobei der Parameter so aufgebaut ist, dass ein Teil den ersten Kernnetzknoten (SGSN 1) identifiziert und ein anderer Teil des Parameters den Funkzugangsnetzknoten identifiziert.

51. Knoten nach einem der Ansprüche 35 bis 43, **dadurch gekennzeichnet, dass** in der Handover-Anforderungsnachricht die temporäre Mobilteilnehmerkennung der Mobilstation (MS) enthalten ist.

52. Knoten nach Anspruch 51, **dadurch gekennzeichnet, dass** in der Handover-Anforderungsnachricht das zugeordnete Aufenthaltsgebiet (LA) der Mobilstation (MS) enthalten ist.

53. Knoten nach einem der Ansprüche 35 bis 43, **dadurch gekennzeichnet, dass** in der Handover-Anforderungsnachricht die temporäre Paket-Mobilteilnehmerkennung der Mobilstation (MS) enthalten ist.

54. Knoten nach Anspruch 53, **dadurch gekennzeichnet, dass** in der Handover-Anforderungsnachricht mindestens eines von dem zugeordneten Routing-Gebiet (RA), der internationalen Mobilteilnehmerkennung der Mobilstation (MS) enthalten ist.

55. Knoten nach einem der Ansprüche 36 bis 54, **dadurch gekennzeichnet, dass** die Erstanforderung eine von einer Anbindungsanforderung, einer Routing-Gebiets-Aktualisierungsanforderung oder einer Aufenthaltsaktualisierungsanforderung ist.

56. Erster Kernnetzknoten (SGSN 1) eines Mobilkommunikationssystems, wobei das System eine Mobilstation (MS), die mit dem ersten Kernnetzknoten (SGSN 1) verbunden oder daran angebunden ist, einen Funkzugangsnetzknoten (RNC/BSC) und einen zweiten Kernnetzknoten (SGSN 2) umfasst, **dadurch gekennzeichnet, dass** der erste Kernnetzknoten umfasst:
Mittel zum Bestimmen, dass er die Mobilstation (MS) am Funkzugangsnetzknoten (RNC/BSC) nicht mehr bedienen kann oder sollte,
Mittel zum Auffordern des Funkzugangsnetzknotens (RNC/BSC), eine Prozedur durchzuführen, um die Anbindung der Mobilstation (MS) zu einem anderen Kernnetzknoten (SGSN 2) zu verlegen, um die Mobilstation (MS) am Funkzugangsnetzknoten (RNC/BSC) zu bedienen.

57. Knoten nach Anspruch 56, wobei die angeforderte Prozedur eine Prozedur zur Verlagerung des versorgenden Funknetzsubsystems ist, und die vom Funkzugangsnetzknoten empfangene Nachricht eine Verlagerungsanforderungsnachricht, und die an den zweiten Kernnetzknoten gesendete Nachricht eine Vorwärtsverlagerungs-Anforderungsnachricht ist.

58. Knoten nach Anspruch 57, **dadurch gekennzeichnet, dass** der Knoten umfasst:
Mittel zum Empfangen einer Verlagerungsanforderungsnachricht vom Funkzugangsnetzknoten (RNC/BSC) während der Prozedur zur Verlagerung des versorgenden Funknetzsubsystems, die einen Parameter enthält, der identifiziert, mit welchem Netzknoten (SGSN 2) die Mobilstation (MS) verbunden werden sollte.

59. Knoten nach Anspruch 56, **dadurch gekennzeichnet, dass** Mittel zum Empfangen einer Verlagerungsanforderungsnachricht vom Funkzugangsnetzknoten während der Prozedur zur Verlagerung des versorgenden Funknetzsubsystems, die einen Parameter enthält, der anzeigt, dass ein Wechsel des Netzknoten angefordert oder gewünscht wird, woraufhin entschieden wird, welcher Netzknoten der Zielnetzknoten (SGN 2) sein sollte.

60. Knoten nach einem der Ansprüche 56 bis 59, **dadurch gekennzeichnet, dass** das Netz ein Mobilkommunikationsnetz des allgemeinen paketvermittelten Funkdienstes des universellen Mobilfunk-Telekommunikationssystems ist.

## Revendications

1. Procédé pour un premier noeud de réseau central (SGSN1) d'un système de télécommunication mobile, ledit système incluant une station mobile (MS) rattachée au premier noeud de réseau central (SGSN1), un noeud de réseau d'accès radio (RNC/BSC) et un second noeud de réseau central (SGSN2), **caractérisé en ce que** à chaque fois que le premier noeud de réseau central (SGSN1) détermine qu'il ne devrait plus ou ne pourrait plus gérer ladite station mobile (MS) au niveau du noeud de réseau d'accès radio (R NC/BSC), envoyer un message de demande de transfert intercellulaire au second noeud de réseau central (SGSN2) afin de demander au second noeud de réseau central (SGSN2) de gérer, au niveau du noeud de réseau d'accès radio (RNC/BSC), la station mobile (MS).

2. Procédé selon la revendication 1, **caractérisé en ce que** la détermination est provoquée par une demande initiale envoyée par la station mobile (MS) au noeud de réseau d'accès radio (RNC/BSC) et étant acheminée vers le premier noeud de réseau central (SGSN1).

3. Procédé selon la revendication 2, **caractérisé en ce que** le premier noeud de réseau central (SGSN1) afin de déterminer si la station (MS) peut ou devrait être gérée est adapté pour déterminer l'adresse du noeud de réseau central auquel la station mobile (MS) a été connectée précédemment et aller chercher ou recevoir les données de la station mobile (MS) depuis ledit noeud de réseau central précédemment connecté.

4. Procédé selon une quelconque des revendications précédentes, **caractérisé en ce que** le premier noeud de réseau central (SGSN1) est adapté pour détecter à quel opérateur appartient la station mobile (MS) et pour envoyer le message de demande de transfert intercellulaire audit second noeud de réseau central (SGSN2) appartenant audit opérateur.

5. Procédé selon la revendication 4, **caractérisé en ce que** le premier noeud de réseau central (SGSN1) est adapté pour détecter à quel opérateur appartient la station mobile (MS) en effectuant une analyse sur un paramètre qui est fixe pour la station mobile.

6. Procédé selon la revendication 5, **caractérisé en ce que** ledit paramètre est le paramètre d'identité internationale d'abonné mobile.

7. Procédé selon une des revendications précédentes, **caractérisé en ce que** le premier noeud de réseau central (SGSN1) est adapté pour envoyer le message de demande de transfert intercellulaire à un second noeud de réseau central (SGSN2) sur la base de l'information de charge des différents noeuds de réseau central.

8. Procédé selon une des revendications 1 à 6, **caractérisé en ce que** le premier noeud de réseau central (SGSN1) est adapté pour envoyer le message de demande de transfert intercellulaire à un second noeud de réseau central par défaut (SGSN2).

9. Procédé selon une des revendications précédentes, **caractérisé en ce que** dans ledit message de demande de transfert intercellulaire est incluse une adresse ou une identité du premier noeud de réseau central (SGSN1).

10. Procédé selon une quelconque des revendications précédentes, **caractérisé en ce que** dans ledit message de demande de transfert intercellulaire un paramètre est inclus qui peut être utilisé pour trouver le noeud de réseau d'accès radio impliqué, ou qui identifie directement le noeud de réseau d'accès radio impliqué.

11. Procédé selon une des revendications 1 à 9, **caractérisé en ce que** dans ledit message de demande de transfert intercellulaire est inclus un paramètre qui peut être utilisé pour trouver la zone dans laquelle la station mobile (MS) est actuellement située.

12. Procédé selon une des revendications 1 à 9, **caractérisé en ce que** ledit premier noeud de réseau central (SGSN1) envoie un second message audit second noeud de réseau central (SGSN2) après que ledit message de de demande de transfert intercellulaire a été envoyé, à l'intérieur dudit message un paramètre est inclus qui peut être utilisé pour trouver le noeud de réseau d'accès radio impliqué, ou un paramètre qui identifie directement le noeud de réseau d'accès radio impliqué.

13. Procédé selon une des revendications 1 à 9, **caractérisé en ce que** ledit premier noeud de réseau central (SGSN1) envoie un second message audit second noeud de réseau central (SGSN2) après que ledit message de demande de transfert intercellulaire a été envoyé, à l'intérieur dudit message un paramètre est inclus qui peut être utilisé pour trouver la zone dans laquelle la station mobile (MS) est actuellement située.

14. Procédé selon les revendications 10 à 13, **caractérisé en ce que** ledit paramètre comprend au moins un d'un identifiant de contrôleur de radioréseau global, l'identité de zone de localisation, l'identifiant de zone de service, l'identifiant de cellule pour identifier le noeud de réseau d'accès radio impliqué (RNC/BSC) ou la zone où la station mobile (MS) est actuellement située.

15. Procédé selon les revendications 10 à 13, **caractérisé en ce que** le réseau est un réseau GPRS et ledit paramètre comprend l'identifiant de connexion virtuelle de protocole GPRS de système de station de base et/ou l'identifiant d'équipement de service de réseau vers ledit second noeud de réseau central (SGSN2) pour identifier le noeud de réseau d'accès radio impliqué (RNC/BSC) ou la zone où la station mobile (MS) est actuellement située.

16. Procédé selon les revendications 10 à 13, caractérisé e ce que le réseau est un réseau GSM, ledit paramètre comprend le paramètre d'identifiant d'équipement de service de réseau, lequel paramètre est structuré de sorte qu'une partie identifie le premier noeud de réseau central (SGSN1) et une autre partie du paramètre identifie le noeud de réseau d'accès radio.

17. Procédé selon une des revendications 1 à 9, **caractérisé en ce que** dans ledit message de demande de transfert intercellulaire est incluse l'identité temporaire d'abonné mobile de la station mobile (MS).

18. Procédé selon la revendication 17, **caractérisé en ce que** dans ledit message de demande de transfert intercellulaire est incluse la zone de localisation (LA) associée de la station mobile (MS).

19. Procédé selon une des revendications 1 à 9, **caractérisé en ce que** dans ledit message de demande de transfert intercellulaire est incluse l'identité temporaire d'abonné mobile de la station mobile (MS).

20. Procédé selon la revendication 19, **caractérisé en ce que** dans ledit message de demande de transfert intercellulaire comprenant au moins une des zones de routage (RA) associées, l'identité d'abonné mobile internationale de la station mobile (MS) est incluse.

21. Procédé selon une des revendications 2 à 20, **caractérisé en ce que** ladite demande initiale est une d'une demande de rattachement, une demande de mise à jour de zone de routage ou une demande de mise à jour de zone de localisation.

22. Procédé pour un premier noeud de réseau central (SGSN1) d'un système de télécommunication mobile, ledit système incluant une station mobile (MS) connectée ou rattachée au premier noeud de réseau central (SGSN1), un noeud de réseau d'accès radio (RNC/BSC) et un second noeud de réseau central (SGSN2), **caractérisé en ce que** à chaque fois que le premier noeud de réseau central (SGSN1) détermine qu'il ne devrait plus ou ne pourrait plus gérer ladite station mobile (MS) au niveau du noeud de réseau d'accès radio (RNC/BSC), demander au noeud de réseau d'accès radio (RNC/BSC) d'effectuer une procédure pour déplacer le rattachement de la station mobile (MS) vers un autre noeud de réseau central (SGSN2) pour gérer, au niveau du noeud de réseau d'accès radio (RNC/BSC), la station mobile (MS).

23. Procédé selon la revendication 22, comprenant de recevoir un message provenant du noeud de réseau d'accès radio lors de la demande au noeud de réseau d'accès radio (RNC/BSC) d'effectuer une procédure pour déplacer le rattachement de la station mobile (MS) et l'envoi d'un message au second noeud de réseau central.

24. Procédé selon la revendication 23, dans lequel la procédure demande est une procédure de relocalisation de sous-système de radioréseau de desserte et le message reçu depuis le réseau d'accès radio est un message demandé de relocalisation et le message envoyé audit second noeud de réseau central est un message de demande de relocalisation avant.

25. Procédé selon la revendication 24, **caractérisé en ce que** pendant ladite procédure de relocalisation de sous-système de réseau radio de desserte, un message Relocalisation Demandée est reçu depuis ledit noeud de réseau d'accès radio (RNC/BSC), incluant un paramètre identifiant à quel noeud de réseau (SGSN2) la station mobile (MS) devrait devenir connectée.

26. Procédé selon la revendication 24, **caractérisé en ce que** pendant ladite procédure de relocalisation de sous-système de radioréseau de desserte un message Relocalisation Demandée est reçu depuis ledit noeud de réseau d'accès radio (RNC/BSC), incluant un paramètre indiquant qu'un changement de noeud de réseau est requis ou voulu, décidant quel noeud de réseau devrait être le noeud de réseau cible (SGSN2).

27. Procédé selon une des revendications 24 à 26, **caractérisé en ce que** ledit réseau est un réseau de communication mobile GPRS UMTS.

28. Procédé selon la revendication 24, **caractérisé en ce que** ladite procédure de relocalisation de sous-système de radioréseau de desserte déplace le rattachement de la station mobile du premier noeud de réseau central au second noeud de réseau central, dans ladite procédure le noeud de radioréseau cible, ou ID cible, est initialisé de manière égale au noeud de radioréseau source, ou ID source.

29. Procédé dans un système de télécommunication mobile, ledit système incluant une station mobile (MS), un domaine incluant au moins un noeud de réseau d'accès radio (RNC cible) et un nombre de noeuds de réseau central (SGSN1, SGSN2), ledit noeud de réseau d'accès radio (RNC cible) étant connecté à au moins un noeud de réseau central (SGSN1, SGSN2), dans lequel afin d'effectuer une relocalisation de sous-système de radioréseau de desserte, un ancien noeud de réseau d'accès radio (RNC source) auquel la station mobile (MS) est connectée, envoie (2) un message requis de relocalisation vers un ancien noeud de réseau central (SGSN ancien) auquel la station mobile (MS) est connectée, et ledit ancien noeud de réseau central (SGSN ancien) envoie (3a) un message de demande de relocalisation avant conformément à 3GPP TS 23.060 vers un premier noeud de réseau central (SGSN1) dans ledit domaine, **caractérisé en ce que** si ledit premier noeud de réseau central (SGSN1) détermine que la station mobile (MS) appartient à ou devrait être gérée par un noeud de réseau central d'un autre opérateur de ce domaine, il envoie (3b) le message de demande de relocalisation avant à un second noeud de réseau central (SGSN2) résidant dans ce domaine afin de demander au second noeud de réseau central (SGSN2) de gérer la station mobile (MS), et si le second noeud de réseau central (SGSN2) détermine que la station mobile (MS) appartient à ou devrait être gérée par un noeud de réseau central de son propre opérateur, il continuera de gérer ladite station mobile (MS).

30. Procédé selon la revendication 29, **caractérisé en ce que** si le second noeud de réseau central (SGSN2) trouve qu'il ne peut pas gérer la station mobile (MS), il est adapté pour envoyer (3b) le message de demande de relocalisation avant à un autre noeud de réseau central.

31. Procédé selon la revendication 29, **caractérisé en ce que** si le second noeud de réseau central (SGSN2) trouve qu'il ne peut pas gérer la station mobile (MS), il est adapté pour envoyer un message de réponse rejetant le transfert intercellulaire, c'est-à-dire la procédure de relocalisation de sous-système de radioréseau de desserte.

32. Procédé selon la revendication 29, **caractérisé en ce que** ledit premier noeud de réseau central (SGSN1) est adapté pour détecter à quel opérateur appartient la station mobile (MS) en effectuant une analyse sur un paramètre qui est fixé pour la station mobile (MS), et envoyer (3a)le message de demande de relocalisation avant à un second noeud de réseau central (SGSN2) appartenant à cet opérateur.

33. Procédé selon la revendication 32, **caractérisé en ce que** ledit paramètre est le paramètre d'identité international d'abonné mobile.

34. Procédé selon la revendication 29, **caractérisé en ce que** le premier noeud de réseau central (SGSN1) est adapté pour envoyer (3a) le message de demande de relocalisation avant à un second noeud de réseau central par défaut (SGSN2).

35. Premier noeud de réseau central (SGSN1) d'un système de télécommunication mobile, ledit système incluant une station mobile (MS) rattachée au premier noeud de réseau central (SGSN1), un noeud de réseau d'accès radio (RNC/BSC) et un second noeud de réseau central (SGSN2), **caractérisé en ce que** le noeud comprend un moyen pour déterminer qu'il ne devrait plus ou ne pourrait plus gérer ladite station mobile (MS) au niveau du noeud de réseau d'accès radio (RNC/BSC),
un moyen pour envoyer un message de demande de transfert intercellulaire au second noeud de réseau central (SGSN2) afin de demander au second noeud de réseau central (SGSN2) de gérer, au niveau du noeud de réseau d'accès radio (RNC/BSC), la station mobile (MS).

36. Noeud selon la revendication 35, **caractérisé en ce que** le noeud comprend en outre un moyen pour recevoir une demande initiale envoyée par le station mobile (MS) vers le noeud de réseau d'accès radio (RNC/BSC) et étant acheminée vers le premier noeud de réseau central (SGSN1).

37. Noeud selon la revendication 36, **caractérisé en ce que** le premier noeud de réseau central (SGSN1) afin de déterminer si la station mobile (MS) peut ou devrait être gérée comprend un moyen pour déterminer l'adresse de noeud de réseau central auquel la station mobile (MS) a été connectée précédemment et un moyen pour aller chercher ou recevoir les données de la station mobile (MS) depuis ledit noeud de réseau central précédemment connecté.

38. Noeud selon une quelconque des revendications précédentes 35 à 37, **caractérisé en ce que** le premier noeud de réseau central (SGSN1) comprend un moyen pour détecter à quel opérateur appartient la station mobile (MS), et un moyen pour envoyer le message de demande de transfert intercellulaire audit second noeud de réseau central (SGSN2) appartenant audit opérateur.

39. Noeud selon la revendication 38, **caractérisé en ce que** le premier noeud de réseau central (SGSN1) comprend un moyen pour détecter à quel opérateur appartient la station mobile (MS) en effectuant une analyse sur un paramètre qui est fixé pour la station mobile.

40. Noeud selon la revendication 39, **caractérisé en ce que** ledit paramètre est le paramètre d'identité internationale d'abonné mobile.

41. Noeud selon une quelconque des revendications précédentes 35 à 40, **caractérisé en ce que** le premier noeud de réseau central (SGSN1) comprend un moyen pour envoyer le message de demande de transfert intercellulaire à un second noeud de réseau central (SGSN2) sur la base de l'information de charge des différents nouds de réseau.

42. Noeud selon une quelconque des revendications 35 à 40, **caractérisé en ce que** le premier noeud de réseau central (SGSN1) comprend un moyen pour envoyer le message de demande de transfert intercellulaire à un second noeud de réseau central par défaut (SGSN2).

43. Noeud selon une des revendications précédentes 35 à 42, **caractérisé en ce que** dans ledit message de demande de transfert intercellulaire est incluse une adresse ou une identité du premier noeud de réseau central (SGSN1).

44. Noeud selon une quelconque des revendications précédentes 35 à 43, **caractérisé en ce que** dans ledit message de demande de transfert intercellulaire un paramètre est inclus qui peut être utilisé pour trouver le noeud de réseau d'accès radio impliqué, ou qui identifie directement le noeud de réseau d'accès radio impliqué.

45. Noeud selon une des revendications 35 à 43, **caractérisé en ce que** dans ledit message de demande de transfert intercellulaire est inclus un paramètre qui peut être utilisé pour trouver la zone dans laquelle la station mobile (MS) est actuellement située.

46. Noeud selon une des revendications 35 à 43, **caractérisé en ce que** ledit premier noeud de réseau central (SGSN1) comprend un moyen pour envoyer un second message audit second noeud de réseau central (SGSN2) après que ledit message de demande de transfert intercellulaire a été envoyé, à l'intérieur dudit message est inclus un paramètre qui peut être utilisé pour trouver le noeud de réseau d'accès radio impliqué, ou un paramètre qui identifie directement le noeud de réseau d'accès radio impliqué.

47. Noeud selon une des revendications 35 à 43, **caractérisé en ce que** ledit premier noeud de réseau central (SGSN1) comprend un moyen pour envoyer un second message audit second noeud de réseau central (SGSN2) après que ladite message de demande de transfert intercellulaire a été envoyé, à l'intérieur dudit message un paramètre est inclus qui peut être utilisé pour trouver la zone dans laquelle la station mobile (MS) est actuellement située.

48. Noeud selon les revendications 44 à 47, **caractérisé en ce que** ledit paramètre comprend au moins un d'un identifiant de contrôleur de radioréseau global, l'identité de zone de localisation, l'identifiant de zone de service, l'identifiant de cellule pour identifier le noeud de réseau d'accès radio impliqué (RNC/BSC) ou la zone où la station mobile (MS) est actuellement située.

49. Noeud selon les revendications 44 à 47, **caractérisé en ce que** le réseau est un réseau GPRS et ledit paramètre comprend l'identifiant de connexion virtuelle de protocole GPRS de système de station de base et/ou l'identifiant d'équipement de service de réseau vers ledit second noeud de réseau central (SGSN2) pour identifier le noeud de réseau d'accès radio impliqué (RNC/BSC) ou la zone où la station mobile (MS) est actuellement située.

50. Noeud selon les revendications 44 à 47, **caractérisé en ce que** le réseau est un réseau GSM, ledit paramètre comprend le paramètre d'identifiant d'équipement de service de réseau, lequel paramètre est structuré de telle sorte qu'une partie identifie le premier noeud de réseau central (SGSN1) et une autre partie du paramètre identifie le noeud de réseau d'accès radio.

51. Noeud selon une des revendications 35 à 43, **caractérisé en ce que** dans ledit message de demande de transfert intercellulaire l'identité temporaire d'abonné mobile de la station mobile (MS) est incluse.

52. Noeud selon la revendication 51, **caractérisé en ce que** dans ledit message de demande de transfert intercellulaire est incluse la zone de localisation (LA) associée de la station mobile (MS).

53. Noeud selon une des revendications 35 à 43, **caractérisé en ce que** dans ledit message de demande de transfert intercellulaire est incluse l'identité d'abonné mobile temporaire de paquet de la station mobile (MS).

54. Noeud selon la revendication 53, **caractérisé en ce que** dans ledit message de demande de transfert intercellulaire comprenant au moins une des zones de routage (Ra) associées, l'identité internationale d'abonné mobile de la station mobile (MS) est incluse.

55. Noeud selon une des revendications 36 à 54, **caractérisé en ce que** ladite demande initiale est une d'une demande de rattachement, une demande de mise à jour de zone de routage ou une demande de mise à jour de zone de localisation.

56. Premier noeud de réseau central (SGSN1) d'un système de télécommunication mobile, ledit système incluant une station mobile (MS) connectée ou rattachée au premier noeud de réseau central (SGSN1), un noeud de réseau d'accès radio (RNC/BSC) et un second noeud de réseau central (SGSN2), **caractérisé en ce que** ledit premier noeud de réseau central comprend
un moyen pour déterminer qu'il ne peut plus ou ne devrait plus gérer ladite station mobile (MS) au niveau du noeud de réseau d'accès radio (RNC/BSC),
un moyen pour demander au noeud de réseau d'accès radio (RNC/BSC) d'effectuer une procédure afin de déplacer le rattachement de la station mobile (MS) vers un autre noeud de réseau central (SGSN2) pour gérer, au niveau du noeud de réseau d'accès radio (RNC/BSC), la station mobile (MS).

57. Noeud selon la revendication 56, dans lequel la procédure demandée est une procédure de relocalisation de radioréseau de desserte et le message reçu depuis le réseau d'accès radio est un message Relocalisation Demandée et le message envoyé audit second noeud de réseau central est un message de demande de relocalisation avant.

58. Noeud selon la revendication 57, **caractérisé en ce que** ledit noeud comprend
un moyen pour recevoir pendant ladite procédure de relocalisation de sous-système de radioréseau de desserte, un message Relocalisation Demandée provenant dudit noeud de réseau d'accès radio, incluant un paramètre identifiant à quel noeud de réseau (SGSN2) la station mobile (MS) devrait devenir connectée.

59. Noeud selon la revendication 56, caractérisé pendant ladite procédure de relocalisation de sous-système de radioréseau de desserte par un moyen de réception de message Relocalisation Demandée provenant dudit noeud de réseau d'accès radio, incluant un paramètre indiquant qu'un changement de noeud de réseau est requis ou voulu, décidant quel noeud de réseau devrait être le noeud de réseau cible (SGSN2).

60. Noeud selon une des revendications 56 à 59, **caractérisé en ce que** ledit réseau est un réseau de communication mobile GPRS UMTS.
